## Europäisches Patentamt

## European Patent Office

## Office européen des brevets

(19)

(11) Veröffentlichungsnummer: **0 207 258**
**A1**

(12) # EUROPÄISCHE PATENTANMELDUNG

(21) Anmeldenummer: **86106343.6**

(22) Anmeldetag: **07.05.86**

(51) Int. Cl.⁴: **B 42 D 15/02**
**G 11 B 33/06, G 11 B 25/06**

(30) Priorität: **08.05.85 DE 3516592**

(43) Veröffentlichungstag der Anmeldung:
**07.01.87 Patentblatt 87/2**

(84) Benannte Vertragsstaaten:
**AT BE CH DE FR GB IT LI LU NL SE**

(71) Anmelder: **Weigl, Robert**
**Franz-Schuster-Strasse 31**
**D-8027 Neuried(DE)**

(72) Erfinder: **Weigl, Robert**
**Franz-Schuster-Strasse 31**
**D-8027 Neuried(DE)**

(74) Vertreter: **Fehners, Klaus Friedrich, Dipl.-Ing.**
**Dipl.-Wirtsch.-Ing. et al,**
**Patentanwälte Dipl.-Ing. A. Wedde Dipl.-Ing. K. Empl**
**Dipl.-Ing., Dipl.-Wirtsch.-Ing. K. Fehners**
**Schumannstrasse 2**
**D-8000 München 80(DE)**

(54) **Grusskarte oder dergleichen mit individuell besprechbarem integrierten Tonträger.**

(57) Grusskarte oder derleichen mit einem integrierten, individuell besprechbaren Tonträger, welcher in einem, der Grusskarte oder dergleichen angepassten Gehäuse (19) angeordnet ist und im wesentlichen ein mechanisch/elektrisches Tonträgermodul mit einem Magnetband (11), einem Tonkopf (10) sowie einem motorischen Antrieb (24) und weiterhin eine notwendige elektrische Schaltung, einen Schallwandler sowie eine Stromquelle enthält. Das Magnetband (11) ist auf einem Transportrad (12) aufgewickelt, welches über einen als Rollfedermotor ausgebildeten Antrieb (24) angetrieben wird, wobei die Rollfeder (42) des Rollfedermotors (43) auf einer Feder-Vorratstrommel angeordnet ist und während des Aufzugsvorganges auf eine Antriebstrommel aufwickelbar ist. Das Magnetband (11) wird über Umlenkrollen (65) und (67) an dem Tonkopf (10) vorbeigeführt.

EP 0 207 258 A1

./...

FIG. 4

0207258

Beschreibung:

Die Erfindung betrifft eine Grusskarte oder dgl. mit einem integrierten, individuell besprechbaren Tonträger, welcher in einem, der Grusskarte oder dgl. angepassten Gehäuse angeordnet ist und im wesentlichen ein mechanisch/elektrisches Tonträgermodul einschliesslich der notwendigen elektrischen Schaltung, einen Schallwandler sowie eine Stromquelle enthält.

Aus der Deutschen Offenlegungsschrift 32 39 597 ist eine Grusskarte bekannt, bei welcher das Tonträgermodul als integrierter Schaltkreis ausgebildet ist, welcher eine Melodie oder eventuell auch einen gesprochenen Text vorprogrammiert enthält und beim Öffnen der beispielsweise als Faltblatt ausgeführten Grusskarte abgespielt wird.

Diese bekannten "tönenden" Grusskarten erlauben jedoch keine individuelle Bespielung bzw. Besprechung in Form von frei von dem Absender aufgesprochener Worte und Sätze.

Aufgabe der Erfindung ist es deshalb, eine Grusskarte mit einem Tonträger zu schaffen, welcher von dem Absender mit einem zeitlich begrenzten Text oder einer Melodie bespielt und von dem Empfänger wiederholt abgespielt werden kann.

...

Diese Aufgabe wird dadurch gelöst, dass bei einer Grusskarte der eingangs genannten Art das Tonträgermodul ein Magnetband, einen Tonkopf sowie einen motorischen Antrieb umfasst.

Im Gegensatz zu den bekannten, vorprogrammierten integrierten Schaltkreisen sind Magnetbänder bekannterweise dazu geeignet, bei Verwendung von entsprechenden Mitteln, also Tonkopf und Mikrophon, individuell besprochen und anschliessend wiederholt abgespielt zu werden.

Erfindungsgemäss enthält der motorische Antrieb einen Motor, ein Antriebsrad und ein Transportrad für das Magnetband.

Insbesondere die Anordnung eines Antriebsrades in Kombination mit einem Transportrad gewährleistet gleichzeitig den Umlauf des Magnetbandes wie auch dessen Bevorratung und Bereitstellung sowie eine bestimmte Bandgeschwindigkeit.

Der Motor kann wahlweise ein Miniatur-Elektro-Motor oder ein Federwerkmotor sein, die Wahl hängt beispielsweise davon ab, ob der Grusskarte ein gewisser "Spielwert" durch die Anordnung eines Federwerkmotors vermittelt werden soll.

Erfindungsgemässe Merkmale einer ersten Ausführungsform sind den Unteransprüchen 5 bis 11 zu entnehmen, bei welcher das Magnetband als Endlosschleife ausgebildet ist.

...

Die erfindungsgemässen Merkmale einer zweiten Ausführungsform, bei
welcher jedoch ein endliches Magnetband verwendet wird, ist den Unteransprüchen 12 bis 36 zu entnehmen. Diese Ausführungsform ist insbesondere durch eine kompakte und damit vorteilhafte Ausbildung des Antriebs- und Transportrades bei räumlicher Integration des motorischen
Antriebes gekennzeichnet.

Die erfindungsgemässen Merkmale einer dritten Ausführungsform, welche
wie die erste Ausführungsform mit einem endlichen Band arbeitet, ist
den Ansprüchen 37 bis 41 zu entnehmen. Bei dieser Ausführungsform ist
zusätzlich zu dem Antriebs- und Transportrad ein zusätzliches Aufzugsrad angeordnet.

Schliesslich sind die erfindungsgemässen Merkmale einer vierten und
fünften Ausführungsform, welche beide mit Endlos-Magnetbändern wie
beim ersten Ausführungsbeispiel arbeiten, den Unteransprüchen 42 und
43 zu entnehmen.

Die fünf vorbezeichneten, die Erfindung jedoch nicht beschränkende
Ausführungsbeispiele sind in den Zeichnungen dargestellt.

Es zeigen

   Fig. 1  eine Draufsicht auf eine erste Ausführungsform der Grusskarte und des darin enthaltenen Tonträgers,

Fig. 2    einen Längsschnitt gemäss Linie II - II in Fig. I,

Fig. 3    einen Längsschnitt gemäss Linie III - III in Fig. I,

Fig. 4    eine Draufsicht auf eine zweite Ausführungsform,

Fig. 5    einen Schnitt gemäss Linie V - V in Fig. 4,

Fig. 6    einen teilweisen Schnitt gemäss Linie VI - Vi in Fig. 4,

Fig. 7    einen Teil-Schnitt gemäss Linie VII - VII in Fig. 4,

Fig. 8    eine Draufsicht auf das Transportrad,

Fig. 9    einen Schnitt gemäss Linie IX - IX in Fig. 8,

Fig. 10   einen Schnitt durch das als Feder-Wickeltrommel ausgebildete Antriebsrad,

Fig. 10a einen Schnitt durch die Bremsvorrichtung,

Fig. 10b eine Ansicht der der Mitnehmerscheibe zugekehrten Fläche der unteren bzw. oberen Deckscheiben,

Fig. 11   eine Draufsicht auf die Feder-Wickeltrommel,

Fig. 12a eine Unteransicht der Feder-Wickeltrommel,

Fig. 12b  ein Detail aus Fig. 12a,

Fig. 13   eine Draufsicht auf die Mitnehmerscheibe,

Fig. 14   eine Seitenansicht der Mitnehmerscheibe,

Fig. 15   einen Schnitt durch die Feder-Vorratstrommel,

Fig. 16   eine schematische Draufsicht auf eine dritte Ausführungsform,

Fig. 17   eine schematische Draufsicht auf eine vierte Ausführungsform und

Fig. 18   eine schematische Draufsicht auf eine fünfte Ausführungsform.

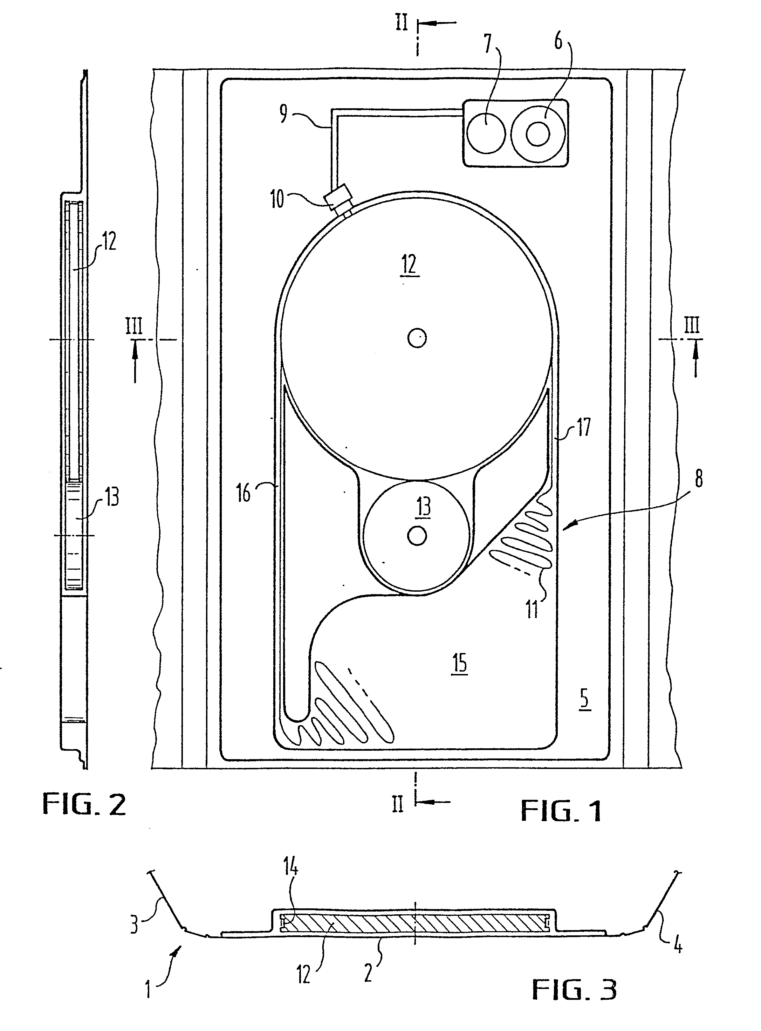

Die in Fig. 1 dargestellte Grusskarte 1 ist 3-teilig ausgebildet, sie umfasst ein Grundblatt 2, einen ersten Klappdeckel 3 sowie einen zweiten Klappdeckel 4. Auf dem Grundblatt 2 ist ein Tonträger angeordnet, welcher beispielsweise durch den ersten Klappdeckel 3 oder auch den zweiten Klappdeckel 4 fest abgedeckt sein kann. Der Tonträger weist im wesentlichen ein Gehäuse 5, einen Schallwandler 6, eine Stromquelle 7, ein Tonträger-Modul 8 sowie eine an sich bekannte, für diesen Zweck erforderliche Elektronik-Schaltung auf.

Stromquelle 7, beispielsweise in Form einer handelsüblichen Miniatur-Flachbatterie, und Schallwandler 6 sind innerhalb des Gehäuses 5 angeordnet und über elektrische Leitungen 9 mit dem Tonträger-Modul 8 verbunden, welches u.A. einen Tonkopf 10, ein Magnetband 11 und die nicht dargestellte Elektronik enthält.

Tonkopf 10 tastet das Magnetband 11 ab, welches als endlose Schleife ausgebildet ist und von einem Transportrad 12 an dem Tonkopf 10 vorbeigeführt wird.

Das Transportrad 12 wird von einem Antriebsrad 13 über Reibung mitgenommen, wobei das Antriebsrad 13 von einem nicht dargestellten Miniatur-Elektro- oder Federwerk-Motor angetrieben wird. Im Falle eines Miniatur-Elektro-Motors ist dieser ebenfalls mit der Stromquelle 7 über elektrische Leitungen verbunden.

Das Transportrad 12 ist als Rillenrad ausgebildet, wobei das Magnetband 11 in der Rille 14 verschiebungsfrei geführt und mitgenommen wird und der Tonkopf 10 in diese Rille 14 einsteht.

Unmittelbar mit dem Transportrad 12 ist ein als Magnetband-Vorratsraum ausgebildetes Behältnis 15 über einen Ausgangskanal 16 und einen Eingangskanal 17 mit dem endlos ausgebildeten Magnetband 11 verbunden. Um eine genau festgelegte Führung des Endlos-Magnetbandes zu behalten, kann der Vorratsraum 15 mit in den Figuren nicht dargestellten Bandführungskanälen versehen sein, welche beispielsweise in Mäanderform ausgebildet und angeordnet sind.

Ebenfalls nicht dargestellt ist ein Kontaktgeber für den Versorgungsstromkreis des Tonträger-Moduls 8, welcher in bekannter Weise als eine, unter Federspannung stehende, vom Deckel der Grusskarte in Ruhestellung gehaltene Kontaktfeder ausgebildet sein kann.
Weiterhin nicht dargestellt ist im Falle der Ausbildung des motorischen Antriebes als Federwerk-Motor bei dieser ersten Ausführungsform ein entsprechender Handgriff zum Aufziehen des Federwerkes.

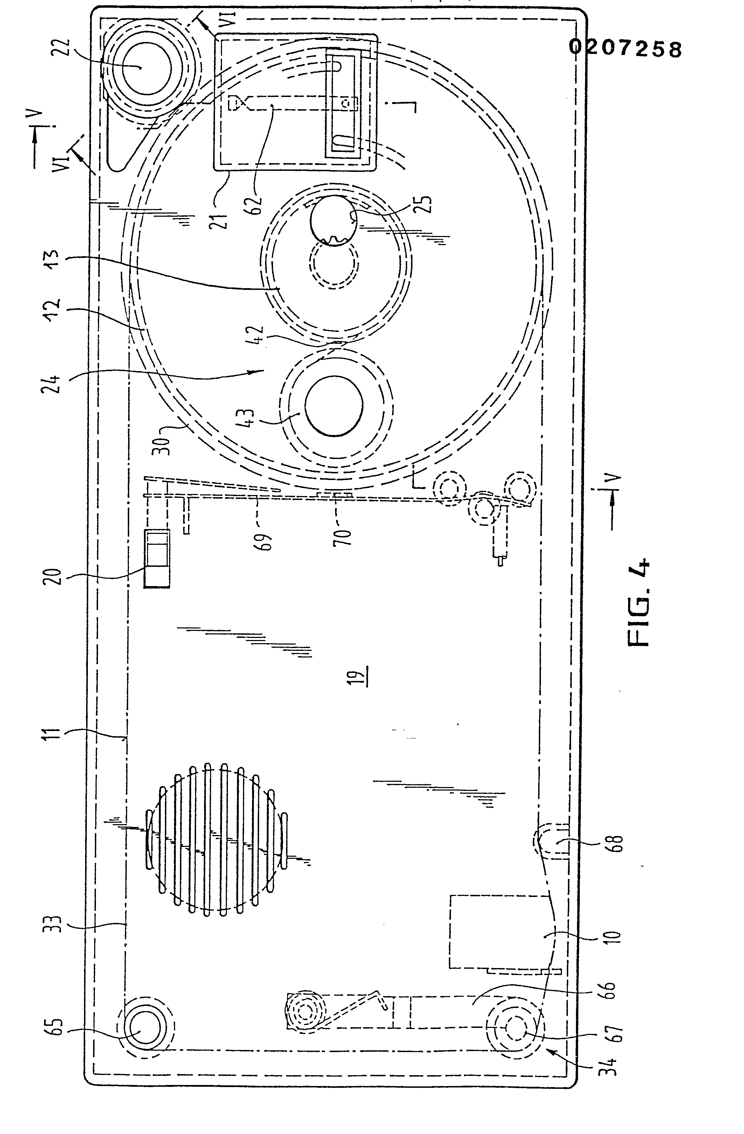

In den Figuren 4 bis 15 ist eine zweite Ausführungsform der Grusskarte dargestellt.
Wie den Figuren 4 und 5 zu entnehmen ist, besteht das Gehäuse 5 aus einem kastenförmigen Unterteil 18 und einem deckelförmigen Oberteil

...

19, in welchem ein Schalter 20 angeordnet ist, mit welchem der Antrieb des Magnetbandes 11 gestoppt oder in Gang gesetzt und gleichzeitig der elektrische Strom für den Betrieb der Elektronik ein- bzw. ausgeschaltet werden kann. Weiter ist in dem Deckel ein Sichtfenster 21 vorgesehen, durch welches eine weiter unten beschriebene Spieldaueranzeige sichtbar ist. Schliesslich ist in einer der Ecken des Oberteiles 19 ein Aufbewahrungsraum 22 für einen Aufzugsschlüssel 23 zum Aufziehen des weiter unten beschriebenen, als Federwerkmotor 24 ausgebildeten Antriebes vorgesehen ist.

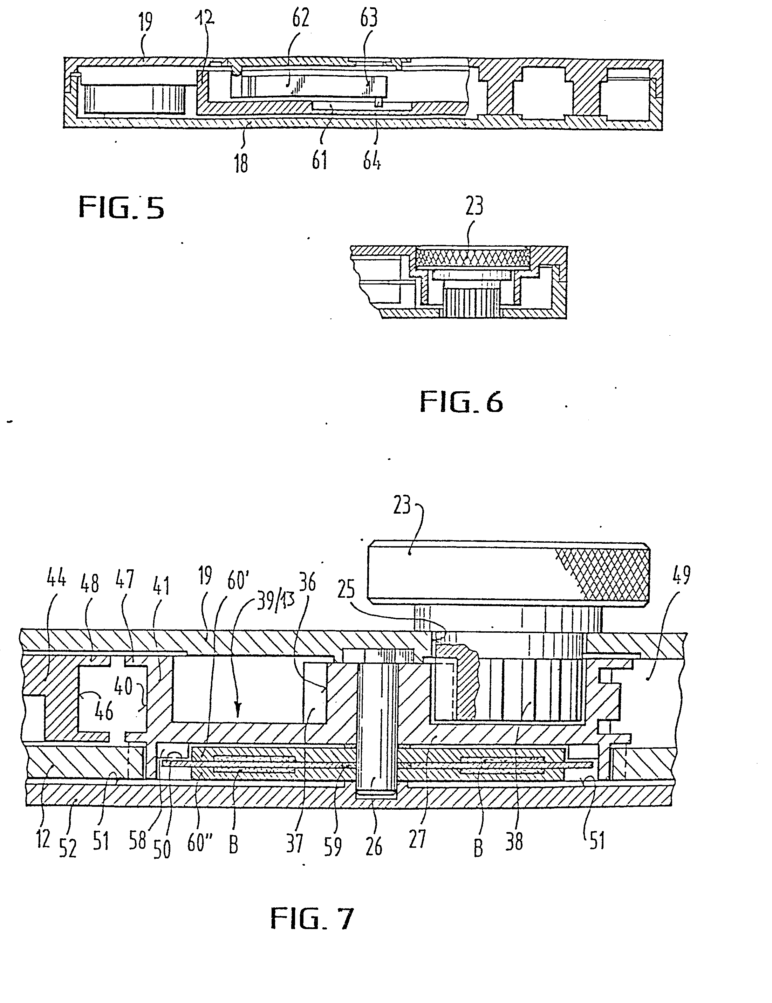

In Fig. 7 ist ein teilweiser Schnitt durch den Antrieb dargestellt, wobei der Aufzugsschlüssel 23 durch eine im Oberteil 19 vorgesehene kreisförmige Bohrung 25 in das Gehäuse 5 hineinragt.

Die kreisförmige Bohrung 25 ist unmittelbar benachbart zu einer, am Oberteil 19 befestigten und in das Gehäuse 5 einstehenden Achse 26 vorgesehen. Um diese Achse 26 ist sowohl das Transportrad 12 als auch das Antriebsrad 13, welche konzentrisch zueinander angeordnet sind, drehbar gelagert.

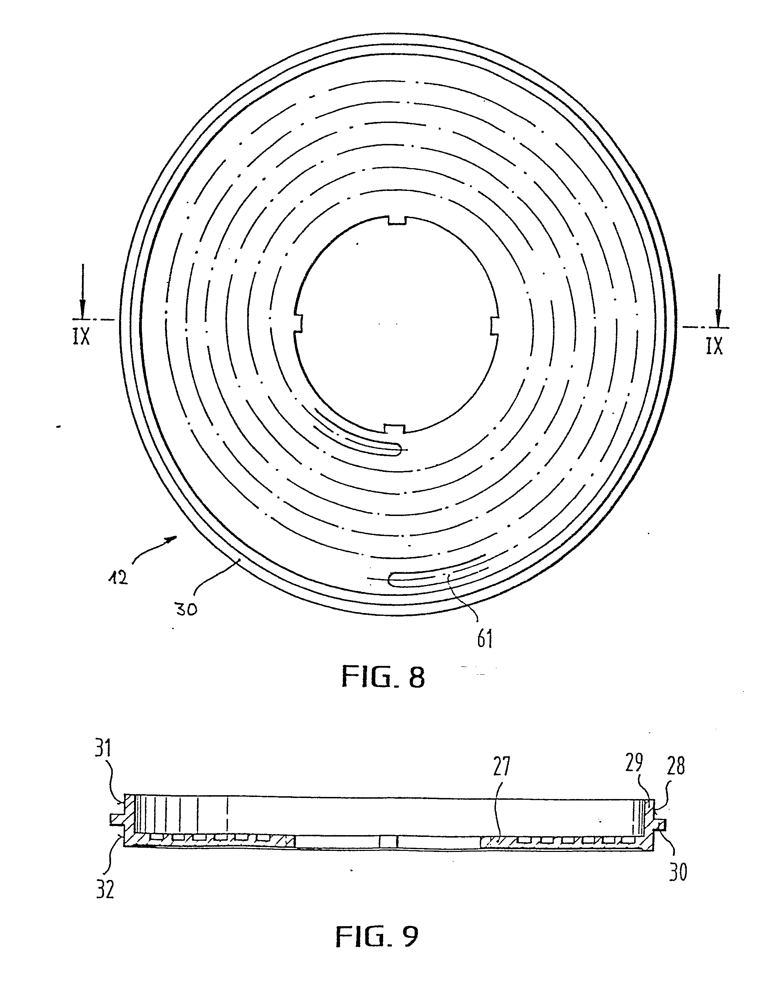

Das Transportrad 12 ist, wie in den Figuren 8 und 9 dargestellt, im wesentlichen topfförmig ausgebildet und weist einen ebenen Boden 27 und eine, gegenüber dem Durchmesser des Bodens 27 niedrige, eine zylindrische äussere Umfangsfläche 28 bildende Wandung 29 auf.

...

Auf der Umfangsfläche 28 ist mittig eine radial nach aussen abstehende Rippe 30 vorgesehen, welche die Umfangsfläche 28 in eine obere und eine untere Spur 31 bzw. 32 aufteilen.

Das Magnetband 11 ist bei dieser Ausführungsform von endlicher Länge und mit seinem ersten Ende auf der oberen Spur 31 und mit seinem zweiten Ende auf der unteren Spur 32 des Transportrades 12, oder umgekehrt, befestigt, wobei jeweils nach Aufzugs- bzw. Abspielstellung der gesamte Magnetband-Vorrat entweder auf der oberen Spur 31 oder der unteren Spur 32 oder jeweils anteilig aufgewickelt ist und eine vom Transportrad 12 entfernte Schleife 33 an dem Magnetkopf 11 vorbei und über mindestens eine erste Umlenkrolle 34 geführt ist.

Der Boden 27 des Transportrades 12 ist unmittelbar zum Unterteil 18 benachbart, wobei die im Oberteil 19 fest angeordnete Achse 26 in eine entsprechende Ausnehmung im Unterteil 18 hineinragt.

Transportrad 12 und Antriebsrad 13 sind fest miteinander verbunden, beispielsweise verklebt, wobei das Antriebsrad 13 in den Boden 27 des Transportrades 12 eingesetzt ist.

Antriebsrad 13 ist ebenfalls wie das Transportrad 12 topfförmig ausgebildet und ist ebenfalls mit seiner offenen Seite dem Oberteil 19 zugewandt und weist in seiner Mitte einen zylindrischen Achsführungszapfen 35 auf, welcher an seiner Aussenwandung 36 als Ritzel 37 ausgebildet ist.

Dieses Ritzel 37 kämmt mit einem, am Aufzugsschlüssel 23 ausgebildeten ritzelförmigen Ende 38. Durch Drehen des Aufzugsschlüssels 23 kann über die Ritzel 38 bzw. 37 das als Antriebstrommel 39 wirkende Antriebsrad 13 gedreht werden. Die zylindrische äussere Umfangsfläche 40 der Wandung 41 der Antriebstrommel bildet die Auflagefläche für die Feder 42 eines Rollfedermotors 43, welche sich durch Drehen des Aufzugsschlüssels 23 und damit der Antriebstrommel 39 auf der äusseren Umfangsfläche 40 aufwickelt und wodurch die Antriebstrommel 39 als Federwickeltrommel wirkt.

Die Feder 42 des Rollfedermotors 43 ist auf einer benachbart angeordneten Feder-Vorratstrommel 44 angeordnet und welche sich ebenfalls um eine, am Oberteil 19 vorgesehene feste Achse dreht.

Sowohl Antriebstrommel 39 als auch Feder-Vorratstrommel 44 weisen mindestens an einem der Kanten ihrer äusseren zylindrischen Umfangsflächen 40 bzw. 46 radial nach aussen abstehende Ränder 47 bzw. 48 auf, welche als Anlage für die Rollfeder 42 dienen.

Der Rollfedermotor 43 sowie der insgesamte, vorstehend beschriebene Antrieb dieser Vorrichtung befinden sich im Innenraum 49 des Transportrades 12 und sind dort vollständig und in gesichertem Antriebsschluss miteinander verbunden.

Zur Gewährleistung eines gerade bei Anordnung eines Federwerksmotors als Antrieb notwendigen Gleichlaufes des Transportrades 12 ist die Anordnung einer Bremsvorrichtung wesentlich, welche eine Abbremsung des Transportrades bewirkt.

Hierzu ist eine Mitnehmerscheibe 50 zwischen der Innenseite 51 des Bodens 52 des Unterteils 18 und der Unterseite 53 des Bodens 27 des Transportrades 12 und/oder des Antriebsrades 13 bzw. der Antriebstrommel 39 eingelegt.

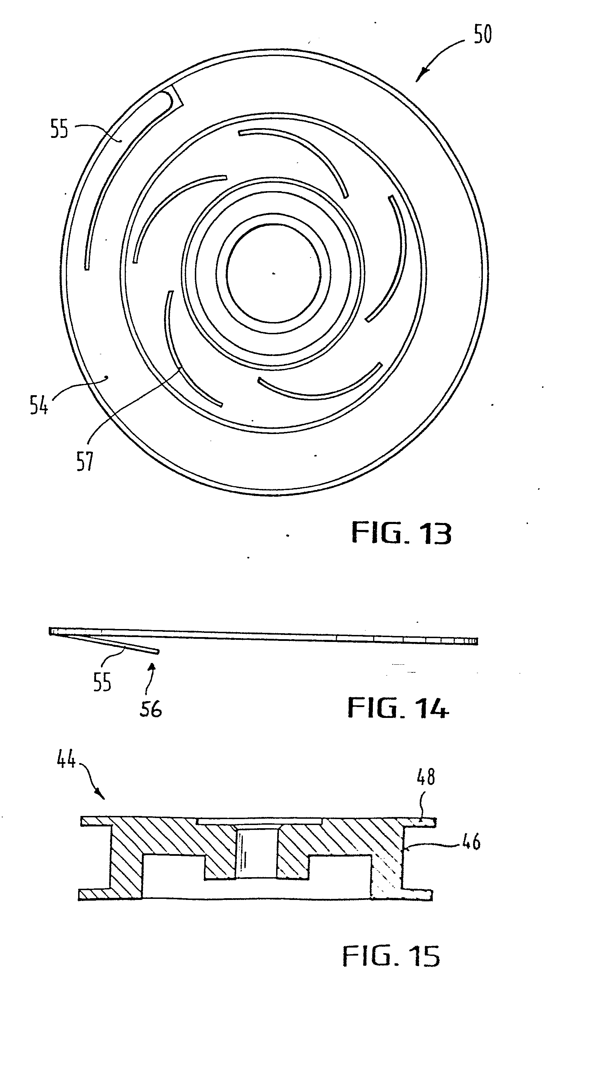

Die Mitnehmerscheibe 50 ist in den Figuren 13 und 14 dargestellt und im wesentlichen als kreisförmige dünne Metallplatte ausgebildet, welche an ihrem Aussenrand eine Zunge 55 aufweist, deren freies Ende 56 zur Unterseite 53 des Bodens 27 des Antriebrades 13 hin aufgebogen ist. In einem Abstand von der Mitte der Federscheibe 50 sind in dieser mehrere spiralförmige Nuten 57 angeordnet.

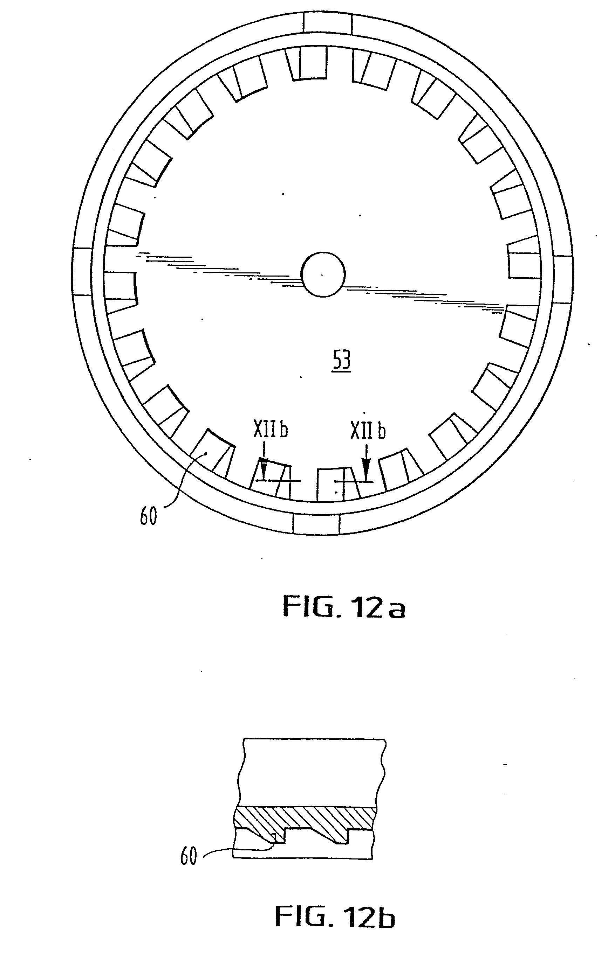

Diese Federscheibe korrespondiert betriebsmässig mit der Unterseite 53 des Bodens 27 entweder des Transportrades 12 und/oder der Antriebstrommel 39, auf welcher in einem bestimmten Abstand von der Mitte bzw. der Achse 26 kreisförmig angeordnete Nocken 58 vorgesehen sind, welche als schiefe Ebenen ausgebildet sind, wie in Fig. 12 dargestellt.

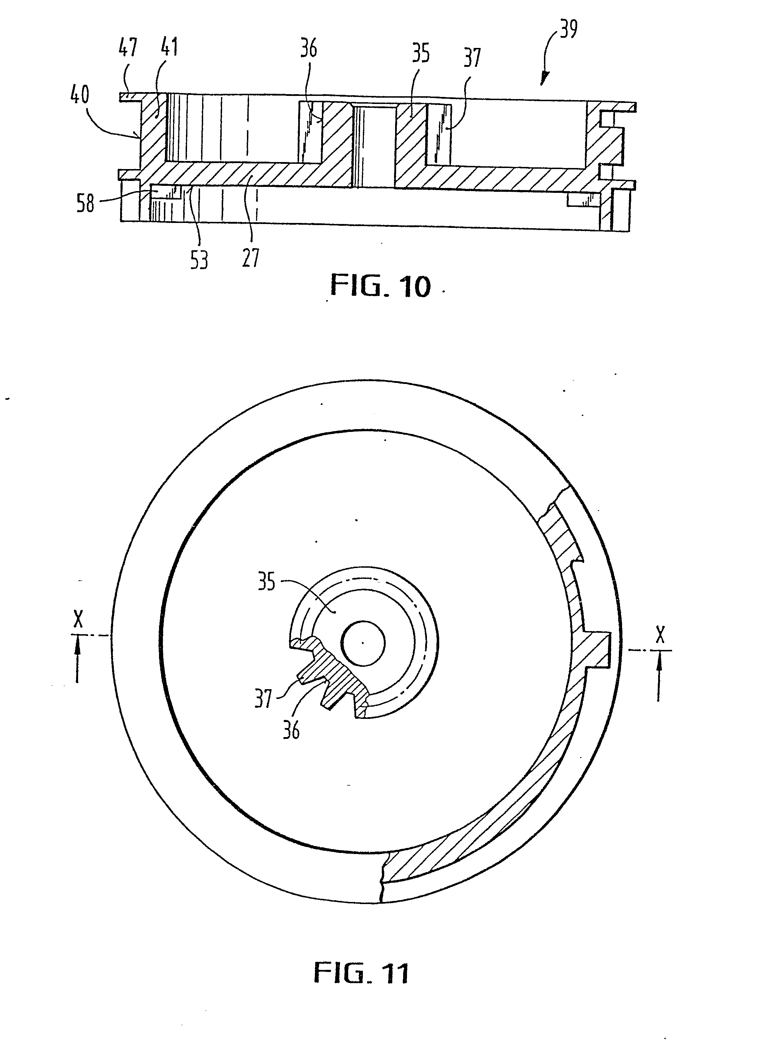

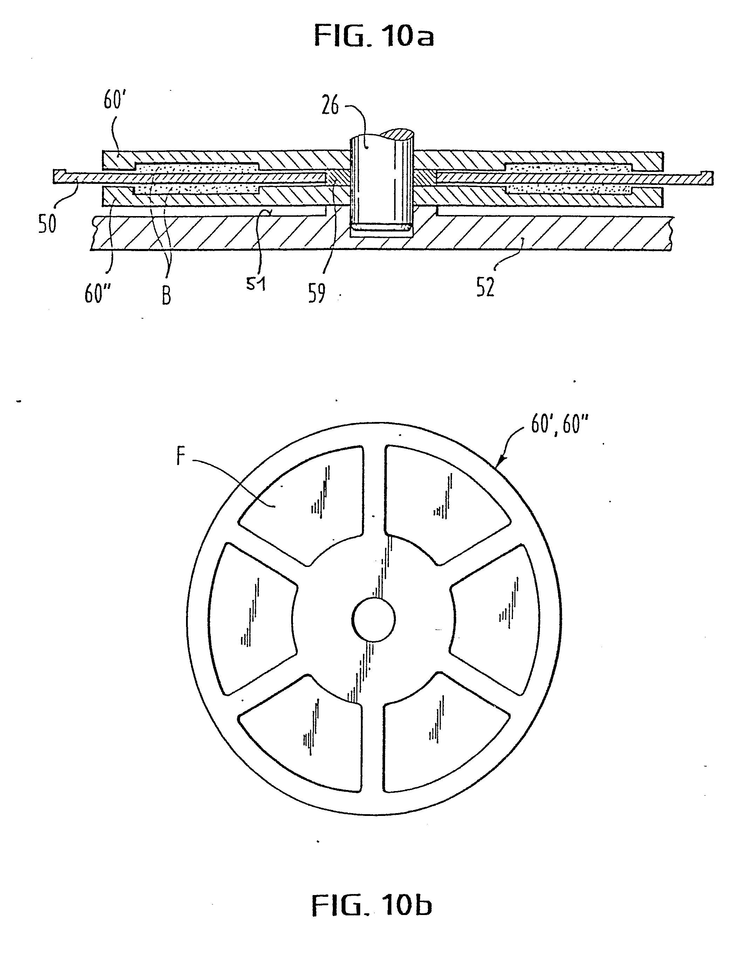

In Fig. 10 und insbesondere 10a ist die Ausbildung der Bremsvorrich-

...

tung veranschaulicht. Die Mitnehmerscheibe 50 ist auf einem Distanzring 59 angeordnet, welcher dicker als die Dicke der Mitnehmerscheibe 50 ist. Auf dem um die Achse 26 angeordneten Distanzring 59 sind eine obere und eine untere Deckscheibe 60' bzw. 60'' angeordnet, welche in ihrem Durchmesser gegenüber dem Durchmesser der Mitnehmerscheibe 50 reduziert sind und insbesondere den Bereich der Mitnehmerscheibe 50 mit den spiralfömigen Nuten 57 abdeckt. Zwischen beiden Deckscheiben 60' und 60'' und der Mitnehmerscheibe 50 ist Bremsfett B vorgesehen, welches sich in die in Fig. 10b dargestellten Freisparungen F einlagert

Während des Aufziehvorganges des Rollfedermotors 43 gleitet die Mitnehmerscheibe 50 mit ihrer Zunge 55 über die Nocken 58 auf der Unterseite 53 des Bodens 27 entweder des Transportrades 12 oder des Antriebsrades 13 bzw. der Antriebstrommel 39. Während des Rücklaufes des durch den Rollfedermotor 43 angetriebenen Transportrades 12 und damit des Antriebsrades 13 bzw. der Antriebstrommel 39 wird dann die Mitnehmerscheibe 50 von den Nocken 58 drehend mitgenommen und es erfolgt durch die Anordnung des Bremsfettes B zwischen der Mitnehmerscheibe 50 und der oberen und unteren Deckscheibe 60' bzw. 60'' eine konstante Abbremsung, welche den Gleichlauf des Transportrades 12 gewährleistet.

Wie weiter den Figuren 8 und 9 zu entnehmen ist, ist auf der Innenseite des Bodens 27 des Transportrades 12 eine in den Boden eingelassene spiralförmige Rille (Planspirale) 61 eingelassen, welche zwischen der Wandung 29 einerseits und der äusseren Umfangsfläche 40 der Antriebstrommel 39 angeordnet ist.

Im Bereich der Planspirale 61 ist an der Unterseite des Oberteiles 19 des Gehäuses 5 ein Schwinghebel 62 vorgesehen, welcher mit einem, an seinem freien Ende 63 vorgesehenen Stift 64 in die Planspirale 61 einsteht. Durch diesen in der Planspirale 61 geführten Schwinghebel 62 sind Anschläge definiert, welche die Anzahl der Drehung des Transportrades entsprechend der vorgesehenen Menge an Magnetband 11 festlegen.

Zusätzlich zu der Umlenkrolle 34 ist eine zweite Umlenkrolle 65 vorgesehen, so dass innerhalb der um die Umlenkrollen 34 und 65 geführten Schleife 33 des Magnetbandes 11 ausreichend Platz zur Anordnung der in den Zeichnungen nicht dargestellten, an sich bekannten Elektronik/ elektrischen Schaltung verbleibt.

Zur Straffung des Magnetbandes 11 ist die Umlenkrolle 34 auf einem Spannhebel 66 gelagert und als Spannrolle 67 ausgebildet, so dass die Schleife 33 des Magnetbandes 11 stets gespannt am Tonkopf 10 vorbeigeführt ist. Zur Verbesserung der Anlage des Magnetbandes 11 am Tonkopf 10 kann noch zusätzlich zur Spannrolle 67 eine im Gehäuse 5 ausgebildete Anlage 68 vorgesehen sein.

Die vorbeschriebene Vorrichtung arbeitet wie folgt. Mit dem Aufzugsschlüssel 23 werden Antriebstrommel 39 und Transportrad 12 über die

...

Ritzel 37 und 38 in Aufzugsrichtung gedreht. Hierbei wickelt sich der gesamte Vorrat des Magnetbandes 11 auf einer der Spuren 31 bzw. 32 vollständig auf, es wird die Anfangsstellung eingenommen. Gleichzeitig wird die Rollfeder 24 von der Feder-Vorratstrommel 44 ab- und auf die als Federwickeltrommel wirkende Antriebstrommel 39 aufgewickelt. Gleichzeitig bewegt sich der Schwinghebel 62 in seine Ausgangsstellung im Sichtfenster 21. Das ungewollte Ablaufen des aufgezogenen Transportrades wird durch eine, an der Rippe 30 auf der zylindrischen äusseren Umfangsfläche 28 des Transportrades 12 fest anliegenden Blattfeder 69 mit Reibbelag 70 bewirkt, welche durch den Schalter 20 in dieser Stoppstellung gehalten wird. Nach Verstellen des Schalters 20 wird der elektrische Strom für die Elektronik zur Verfügung gestellt und gleichzeitig die Blattfeder 69 gelöst, die Rollfeder 24 bewegt das Transportrad 12 und damit das Magnetband 11 am Tonkopf 10 vorbei. Es kann die Aufnahme erfolgen bzw. später die wiederholte Abspielung.

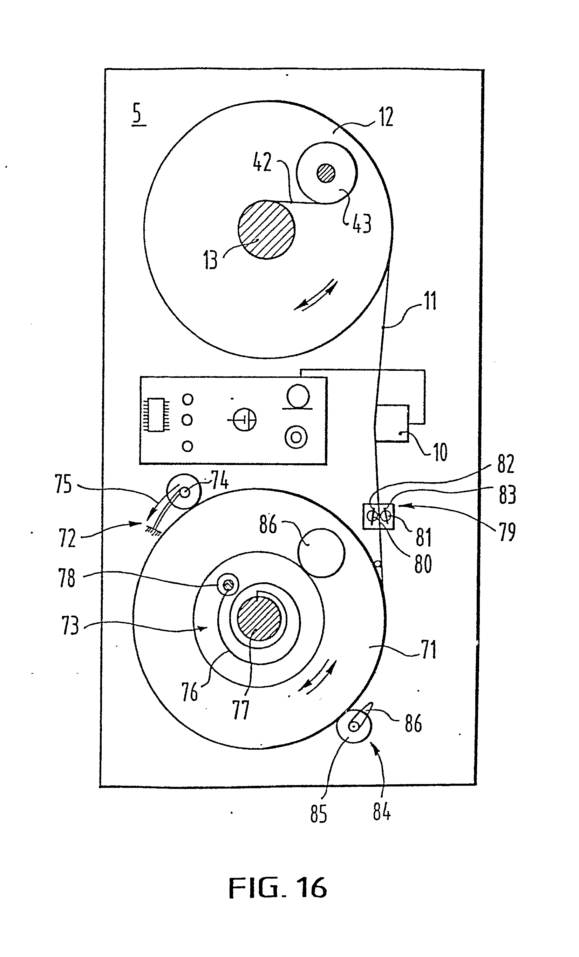

Eine dritte Ausführungsform ist in Fig. 16 dargestellt.

Zusätzlich zum Transportrad 12 und dem Antriebsrad 13 mit Rollfeder 42 und Rollfedermotor 43 ist ein Aufzugsrad 71 angeordnet, wobei das erste Ende des hier endlich ausgebildeten Magnetbandes 11 auf der Umfangsfläche des Aufzugsrades 71 und das zweite Ende auf der Umfangsfläche des Transportrades 12 befestigt ist und wobei das Magnetband 11 zwischen Transport- und Aufzugsrad 12 bzw. 71 an dem Magnetkopf 10

...

vorbeigeführt ist. Das Antriebsrad 13 ist hier als feste Achse ausgebildet, um welche sich das Transportrad 12 mit dem Rollfedermotor 43 dreht und um welche sich die Rollfeder 42 beim Aufzugsvorgang wickelt. Weiterhin sind am Aufzugsrad 71 eine Rücklaufsperre 72 sowie eine Aufzugsbegrenzungsvorrichtung 73 vorgesehen.

Die Rücklaufsperre 72 ist als unmittelbar an der Umfangsfläche des Aufzugsrades 71 beziehungsweise an dem darauf gewickelten Magnetband 11 anliegendes Bremsrad 74 ausgebildet, welches nur in Aufzugsrichtung, nicht aber in Abspielrichtung des Aufzugsrades 71 drehbar ist und welches mittels einer in der Zeichnung 16 angedeuteten Betätigungsvorrichtung 75 vom Aufzugsrad 71 abhebbar ist.

Die Aufzugsbegrenzungsvorrichtung 73 besteht im wesentlichen aus einer Schnur 76 bestimmter Länge, welche mit ihrem ersten Ende an der starren Achse 77 des Aufzugsrades 71 und mit ihrem zweiten Ende an einer, am Aufzugsrad 71 konzentrisch angeordneten Aufwickelrolle 78 befestigt ist.

Weiterhin ist eine Bremsvorrichtung 79 unmittelbar benachbart zum Aufzugsrad 71 angeordnet und enthält im wesentlichen zwei Rollen 80 und 81, zwischen welchen das Magnetband 11 durchlaufend angeordnet ist und welche mit ihren Achsen verschiebbar in zur Abspielrichtung des Magnetbandes 11 hin gerichteten Schlitzen 82 und 83 gelagert sind.

Zusätzlich oder anstelle der Bremsvorrichtung 79 ist eine zweite Bremsvorrichtung 84 vorgesehen, welche im wesentlichen als gummiertes Bremsrad 85 ausgebildet ist, welches mit seiner Achse in einem tangential vom Umfang des Aufzugsrades 71 geführten Schlitz 86 gelagert ist, wobei dieser in Abspielrichtung des Magnetbandes 11 zum Aufzugsrad 71 hin geneigt ist und wobei das gummierte Bremsrad 85 gegen die Umfangsfläche bzw. das darauf gelagerte Magnetband des Aufzugsrades 71 anliegt.

Diese dritte Ausführungsform arbeitet dergestalt, dass das Aufzugsrad 71 per Hand in Aufzugsrichtung gedreht und dadurch das Magnetband 11 auf- und von dem Transportrad 12 abgewickelt wird. Gleichzeitig wird durch die Drehung des Transportrades 12 die Rollfeder 42 von der Feder-Vorratstrommel 44 ab- und auf das als feststehende Achse ausgebildete Antriebsrad 13 aufgewickelt. Weiterhin wickelt sich gleichzeitig die Schnur 76 der Aufzugsbegrenzungsvorrichtung 73 auf der festen Achse 77 auf und begrenzt damit den Aufzugsbereich des Aufzugsrades 71. Das Aufzugsrad 71 enthält ein Fingerloch 86, in welches die Bedienperson einen Finger einstecken und damit das Aufzugsrad 71 betätigen kann.

Das ungewollte Abspielen der Vorrichtung wird durch die Rücklaufsperre 72 verhindert. Durch Lösen der Betätigungsvorrichtung 75 hebt sich das Bremsrad 74 von dem Aufzugsrad 71 ab und durch den Antrieb des Rollfe-

...

dermotors 43 wird das Magnetband 11 am Tonkopf 10 rücklaufend vorbeitransportiert. Zur Gewährleistung eines Gleichlaufes wirken entweder gemeinsam oder allein die Bremsvorrichtungen 79 und 84. Durch die Schrägstellung der Schlitze 82 bzw. 83 in der Bremsvorrichtung 79 beziehungsweise des Schlitzes 86 in der Bremsvorrichtung 84 werden die Bremsräder 80 bzw. 81 und/oder 85 gegen das Magnetband 11 gedrückt, wobei eine vorbestimmte Abbremsung erfolgt.

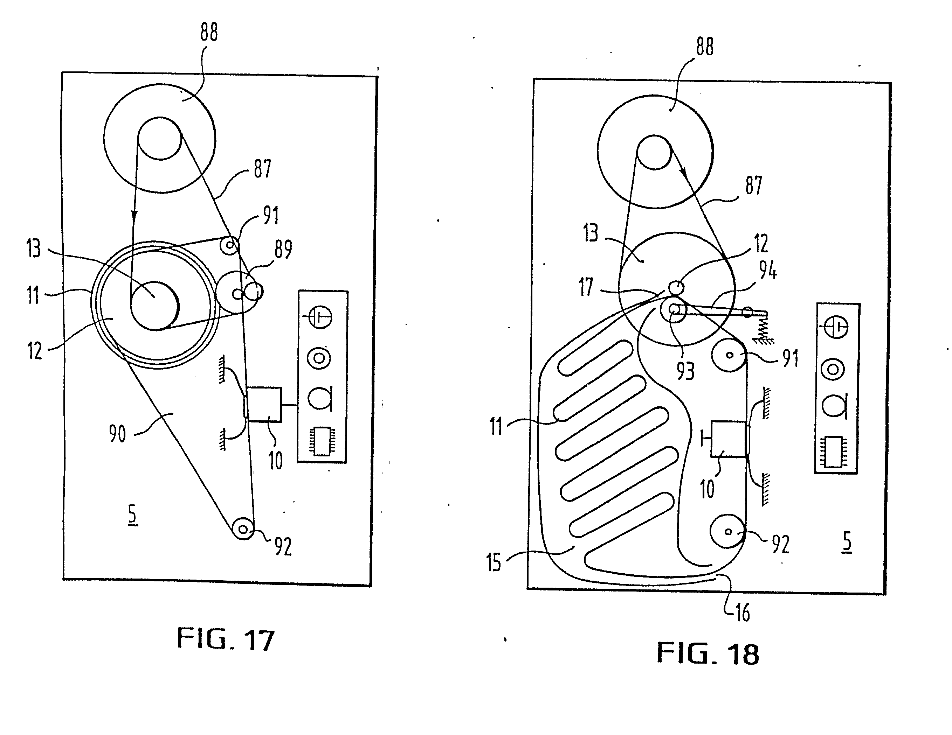

Eine vierte Ausführungsform ist in Fig. 17 schematisch dargestellt.

Hier wird das Transportrad 12 für das Magnetband 11 über ein auf dem Transportrad 12 angeordnetes, konzentrisches Antriebsrad 13 mittels eines Antriebsriemens 87 von einem Motor 88 angetrieben. Gleichfalls wird von diesem Antriebsriemen 87 eine Tonwelle mit Gegendruckrolle 89 angetrieben. Das Magnetband 11 ist mit seinem bestimmten Vorrat vollständig auf dem Transportrad 12 aufgewickelt und über eine Schleife 90 zwischen Tonwelle und Gegendruckwelle 89 geführt und angetrieben und über zwei Umlenkrollen 91 bzw. 92 am Magnetkopf 10 vorbeigeführt.

Bei dieser Ausführungsform ist der Motor 88 vorzugsweise ein Elektro-motor welcher für einen absoluten Gleichlauf sorgt und insofern die Anordnung von Rücklaufsperren, Bremsvorrichtungen etc. überflüssig macht.

...

Eine fünfte und letzte Ausführungsform ist in Fig. 18 dargestellt.

Dort treibt wiederum vorzugsweise ein Elektromotor 88 über einen Antriebsriemen 87 das Antriebsrad 13, auf welchem das Transportrad 12 befestigt ist, sowie eine Gegendruckrolle 93. Zwischen Transportrad 12 und Gegendruckrolle 93 ist das als endloses Band ausgebildete Magnetband 11 geführt und wird von diesen angetrieben und über zwei Umlenkrollen 91 bzw. 92 am Tonkopf 10 vorbeigeführt. Die Gegendruckrolle 93 ist auf einem federnd gelagerten Hebel 94 angeordnet.

Der Vorrat des Magnetbandes 11 ist in einem Behälter 15 in Form einer losen, mäanderförmig geführten Bandschleife in einen dafür vorgesehenen Speicherkanal eingelegt.

Diese Ausführungsform entspricht teilweise der oben geschilderten ersten Ausführungsform.

H/gn

PATENTANWÄLTE  WEDDE , EMPL & FEHNERS

Europäische Patentvertreter  ·  European Patent Attorneys  ·  Mandataires en Brevets Européens

**0207258**

Anwaltsakte: P EU  25 141

Albert Wedde, Dipl.-Ing. †
Karl Empl, Dipl.-Ing.
Klaus Fehners, Dipl.-Ing., Dipl.-Wirtsch.-Ing.

Schumannstr. 2 / Ecke  Prinzregentenstraße
D-8000 München 80
Telefon: (089) 47 15 47
Telex: 523828 cosmo d
Telegramme: cosmopat muenchen

7. Mai 1986


Dipl.-Ing. (FH) Robert Weigl

Franz-Schuster-Strasse 31
D-8027 Neuried


----------------------------------------------------------------


### Grusskarte oder dergleichen mit
### individuell besprechbarem integrierten Tonträger


----------------------------------------------------------------


Patentansprüche:


1.) Grusskarte oder dgl. mit einem integrierten, individuell besprechbaren Tonträger, welcher in einem, der Grusskarte oder dgl.


...

angepassten Gehäuse angeordnet ist und im wesentlichen ein mechanisch/elektrisches Tonträgermodul einschliesslich der notwendigen elektrischen Schaltung, einen Schallwandler sowie eine Stromquelle enthält, d a d u r c h  g e k e n n z e i c h n e t , dass das Tonträgermodul (8) ein Magnetband (11), einen Tonkopf (10) sowie einen motorischen Antrieb umfasst.

2.) Grusskarte oder dgl. nach Anspruch 1, d a d u r c h  g e k e n n z e i c h n e t , dass der motorische Antrieb einen Motor, ein Antriebsrad (13) und ein Transportrad (12) für das Magnetband (12) enthält.

3.) Grusskarte oder dgl. nach Anspruch 2, d a d u r c h  g e k e n n z e i c h n e t , dass der Motor ein Miniatur-Elektro-Motor ist.

4.) Grusskarte oder dgl. nach Anspruch 2, d a d u r c h  g e k e n n z e i c h n e t , dass der Motor ein Federwerkmotor ist.

5.) Grusskarte oder dgl. nach Anspruch 2, d a d u r c h  g e k e n n z e i c h n e t , dass das Transportrad (12) als Rillenrad ausgebildet ist, in dessen Rille (14) das Magnetband (11) geführt ist und dass das Antriebs- und das Transportrad (13 bzw. 12) über Reibung miteinander in Verbindung stehen.

...

6.) Grusskarte oder dgl. nach Anspruch 5, d a d u r c h  g e - k e n n z e i c h n e t , dass das Magnetband (11) als Endlosschleife ausgebildet ist.

7.) Grusskarte oder dgl. nach Anspruch 5, d a d u r c h  g e - k e n n z e i c h n e t , dass der Tonkopf (10) in die Rille (14) des Transportrades (12) einsteht und das Magnetband (11) an dem Tonkopf (16) vorbeigeführt ist.

8.) Grusskarte oder dgl. nach Anspruch 5, d a d u r c h  g e - k e n n z e i c h n e t , dass der Schallwandler (6) sowohl Lautsprecher als auch Mikrophon ist.

9.) Grusskarte oder dgl. nach Anspruch 5, d a d u r c h  g e - k e n n z e i c h n e t , dass das Magnetband (11) innerhalb eines Behältnisses (15) angeordnet ist, welches unmittelbar benachbart zu dem Transportrad (12) angeordnet und mit diesem über einen Ausgangsund Eingangskanal (16 bzw. 17) verbunden und durch welche das Magnetband (11) jeweils geführt ist.

10.) Grusskarte oder dgl. nach Anspruch 9, d a d u r c h  g e - k e n n z e i c h n e t , dass das Magnetband (11) innerhalb des Behältnisses (15) in darin vorgesehenen Kanälen gelagert und geführt ist.

...

11.) Grusskarte oder dgl. nach Anspruch 10, d a d u r c h g e - k e n n z e i c h n e t , dass die Kanäle mäanderförmig ausgebildet sind.

12.) Grusskarte oder dgl. nach Ansprüchen 1 und 2, d a d u r c h g e k e n n z e i c h n e t , dass das Transportrad (12) auch das Magnetband (11) bereitstellt.

13.) Grusskarte oder dgl. nach Anspruch 1, d a d u r c h g e - k e n n z e i c h n e t , dass das Gehäuse (5) aus einem kastenförmigen Unterteil (18) und einem deckelförmigen Oberteil (19) besteht.

14.) Grusskarte oder dgl. nach Ansprüchen 1 und 13, d a d u r c h g e k e n n z e i c h n e t , dass das Transportrad (12) in dem Gehäuse (5) auf einer, am Oberteil (19) befestigten und in das Gehäuse (5) einstehenden Achse (26) drehbar angeordnet ist.

15.) Grusskarte oder dgl. nach Anspruch 14, d a d u r c h g e - k e n n z e i c h n e t , dass das Transportrad (12) im wesentlichen topfförmig ausgebildet ist, welches einen ebenen Boden (27) und eine, gegenüber dem Durchmesser des Bodens (27) niedrige, eine zylindrische äussere Umfangsfläche (28) bildende Wandung (29) aufweist, wobei der Boden (27) des Transportrades (12) un-

. . . .

mittelbar benachbart zum Unterteil (18) angeordnet ist.

16.) Grusskarte oder dgl. nach Anspruch 15, d a d u r c h   g e - k e n n z e i c h n e t ,  dass die Umfangsfläche (28) eine mittig und radial nach aussen abstehende und diese in eine obere und eine untere Spur (31 bzw. 32) aufteilende Rippe (30) aufweist.

17.) Grusskarte oder dgl. nach Ansprüchen 2 und 15, d a d u r c h g e k e n n z e i c h n e t , dass das Antriebsrad (13) als eine in dem Innenraum (49) des Transportrades (12) konzentrisch eingesetzte und mit diesem fest verbundene Antriebstrommel 39 ausgebildet ist, welche die Achslagerung für das Transportrad (12) bildet.

18.) Grusskarte oder dgl. nach Anspruch 17, d a d u r c h   g e - k e n n z e i c h n e t ,  dass die Antriebstrommel (39) ebenfalls topfförmig und mit seiner offenen Seite dem Oberteil (19) zugewandt ausgebildet ist und in ihrer Mitte einen zylindrischen Achsführungszapfen (35) zur Aufnahme der Achse (26) aufweist und welcher an seiner Aussenwandung (36) als Ritzel (37) ausgebildet ist.

19.) Grusskarte oder dgl. nach Ansprüchen 17 und 18, d a d u r c h g e k e n n z e i c h n e t ,  dass das Transportrad (12) eine

...

konzentrische, im Durchmesser dem Durchmesser der Antriebstrommel (39) entsprechende kreisrunde Ausnehmung aufweist, in welche die Antriebstrommel (39) eingesetzt und mit dem Transportrad (12) fest verbunden ist, wobei die Unterseiten der Böden des Transportrades (12) sowie der Antriebstrommel (39) in nahezu einer Ebene liegen.

20.) Grusskarte oder dgl. nach Anspruch 19, d a d u r c h  g e - k e n n z e i c h n e t , dass zwischen den Unterseiten (53) der Böden (27) des Transportrades (12) oder der Antriebstrommel (39) und der Innenseite (51) des Bodens (52) des Unterteiles (18) des Gehäuses (5) eine Bremsvorrichtung vorgesehen ist.

21.) Grusskarte oder dgl. nach Anspruch 21, d a d u r c h  g e - k e n n z e i c h n e t , dass die Bremsvorrichtung im wesentlichen eine Mitnehmerscheibe (50) sowie zwei Deckscheiben (60' bzw. 60'') umfasst, wobei die Mitnehmerscheibe (50) in an den Unterseiten (53) der Böden (27) des Transportrades (12) oder der Antriebstrommel (39) angeordneten Rastvorrichtungen (58) einrastend ausgebildet ist.

22.) Grusskarte oder dgl. nach Anspruch 21, d a d u r c h  g e - k e n n z e i c h n e t , dass die Rastvorrichtung als eine Mehrzahl von in bestimmten Abständen von der Achse (26) kreisförmig auf den zur Innenseite (51) des Bodens (52) des Unterteiles (18) des Bodens (5) gerichteten Unterseiten (53) der Böden (27), des Transportrades (12) oder der Antriebstrommel (39) angeordneten Nocken (58) ausgebildet sind.

23.) Grusskarte oder dgl. nach Anspruch 21, d a d u r c h   g e - k e n n z e i c h n e t , dass die Mitnehmerscheibe (50) eine kreisförmige dünne Metallplatte ist, welche an ihrem Aussenrand (54) mindestens eine Zunge (55) aufweist, deren freies Ende (57) bzw. 58) zur Innenseite (51) des Bodens (52) des Unterteiles (10) hin aufgebogen ist.

24.) Grusskarte oder dgl. nach Anspruch 23, d a d u r c h   g e - k e n n z e i c h n e t , dass die Mitnehmerscheibe (50) in einem Abstand zur Mitte mehrere spiralförmige Nuten (57) aufweist.

25.) Grusskarte oder dgl. nach Anspruch 21, d a d u r c h   g e - k e n n z e i c h n e t , dass die Deckscheiben als obere und untere, die Mitnehmerscheibe (50) abdeckende Deckscheiben (60' bzw. 60'') angeordnet sind und gegenüber dem Durchmesser der Mitnehmerscheibe (50) einen geringeren Durchmesser aufweisen und dass die Mitnehmerscheibe (50) auf einem Distanzring (59) auf der Achse (26) angeordnet ist, wobei die Dicke des Distanzringes (59) grösser ist als die Dicke der Mitnehmerscheibe (50) und das in den Freiräumen zwischen oberer und unterer Deckscheibe (60' bzw. 60'') einerseits und der Mitnehmerscheibe (50) andererseits Bremsfett (B) vorgesehen ist.

26.) Grusskarte oder dgl. nach Anspruch 21, d a d u r c h  g e k e n n z e i c h n e t , dass die Deckscheibe (60' bzw. 60'') auf ihren der Mitnehmerscheibe (50) zugekehrten Flächen Freisparungen (F) aufweisen, in welchen das Bremsfett (B) enthalten ist.

27.) Grusskarte oder dgl. nach Ansprüchen 4 und 17, d a d u r c h  g e k e n n z e i c h n e t , dass der Rollfedermotor (43) im Innenraum (49) des Transportrades (12) vorgesehen ist, wobei die Rollfeder (42) auf einer Feder-Vorratstrommel (44) drehbar um eine am Oberteil (19) des Gehäuses (5) befestigte Achse angeordnet ist und das äussere Ende der Rollfeder auf der zylindrischen äusseren Umfangsfläche (40) der Antriebstrommel (39) befestigt ist.

28.) Grusskarte oder dgl. nach Anspruch 23, d a d u r c h  g e k e n n z e i c h n e t , dass die Antriebstrommel (39) als Federwickeltrommel ausgebildet ist, welche an ihrer zylindrisch Umfangsfläche (40) einen, als Anlage für die Rollfeder (42) dienenden radial nach aussen abstehen Rand (47) aufweist.

29.) Grusskarte oder dgl. nach Anspruch 24, d a d u r c h  g e -

...

kennzeichnet , dass im Oberteil (19) des Gehäuses (5) im Bereich über der Federwickeltrommel eine kreisförmige Bohrung (25) vorgesehen und in welche ein Aufzugschlüssel (23) einsetzbar ist, welcher mit seinem ritzelförmigen Ende (38) in die Federwikkeltrommel einsteht und mit deren Ritzel (37) kämmt.

30.) Grusskarte oder dgl. nach Anspruch 15, d a d u r c h   g e - k e n n z e i c h n e t , dass das Transportrad (12) eine, auf der Innenseite des Bodens (27) eingelassene spiralförmige Rille (Planspirale) (61) aufweist, welche zwischen der Wandung (29) einerseits und der Antriebstrommel (39) andererseits angeordnet ist.

31.) Grusskarte oder dgl. nach Anspruch 26, d a d u r c h   g e - k e n n z e i c h n e t , dass im Bereich der Planspirale (61) an der Unterseite des Oberteiles (19) des Gehäuses (5) ein Schwinghebel (62) vorgesehen ist, welcher mit einem, an seinem freien Ende (63) angeordneten Stift (64) in die Planspirale (61) einsteht.

32.) Grusskarte oder dgl. nach Anspruch 27, d a d u r c h   g e - k e n n z e i c h n e t , dass im Bereich des freien Endes (63) des Schwinghebels (62) im Oberteil (19) des Gehäuses (5) ein Sichtfenster (21) vorgesehen ist, welches sich radial über die Planspirale (61) erstreckt.

...

33.) Grusskarte oder dgl. nach Ansprüchen 1 und 16, d a d u r c h g e k e n n z e i c h n e t , dass das Magnetband (11) von endlicher Länge ist und mit seinem ersten Ende auf der oberen Spur (31) und mit dem zweiten Ende auf der unteren Spur des Transportrades (12, 32) oder umgekehrt, befestigt ist und mit einer vom Transportrad (12) entfernten Schleife (33) an dem Magnetkopf (11) vorbei und über mindestens eine erste Umlenkrolle (34) geführt ist und dass ein bestimmter Vorrat an Magnetband entweder auf der oberen oder der unteren Spur (31 bzw. 32) aufgewickelt ist.

34.) Grusskarte oder dgl. nach Anspruch 29, d a d u r c h g e k e n n z e i c h n e t , dass mindestens eine Umlenkrolle (34) als Spannrolle (67) ausgebildet ist.

35.) Grusskarte oder dgl. nach Anspruch 30, d a d u r c h g e k e n n z e i c h n e t , dass die Spannrolle (67) auf einem federnd gelagerten Spannhebel (66) angeordnet ist.

36.) Grusskarte oder dgl. nach Ansprüchen 3 und 17, d a d u r c h g e k e n n z e i c h n e t , dass der Elektromotor im Innenraum (49) des Transportrades (12) vorgesehen ist und die Antriebstrommel (39) mittels eines Zahn- oder Reibrades antreibt.

37.) Grusskarte oder dgl. nach einem oder mehreren der vorangehenden

- 11 -

0207258

Ansprüche, d a d u r c h g e k e n n z e i c h n e t , dass zusätzlich zu dem Transportrad (12) und dem Antriebsrad (13) ein Aufzugsrad (71) angeordnet ist, wobei das erste Ende des endlichen Magnetbandes (11) auf der Umfangsfläche des Aufzugsrades (71) und das zweite Ende auf der Umfangsfläche des Transportrades (12) befestigt ist und dass innerhalb des Transportrades (12) ein Rollfedermotor (43) mit einer Feder-Vorratstrommel (44) angeordnet ist, wobei das äussere Ende der Rollfeder (42) am Antriebsrad (13), welches als feststehende Drehachse des Transportrades am Gehäuse (5) angeordnet ist, befestigt ist und dass das Magnetband (11) zwischen Transportund Aufzugsrad (12 bzw. 71) an dem Magnetkopf (10) vorbeigeführt ist und dass am Aufzugsrad (71) eine Rücklaufsperre (72) sowie eine Aufzugsbegrenzungsvorrichtung (73) vorgesehen sind.

38.) Grusskarte oder dgl. nach Anspruch 33, d a d u r c h g e - k e n n z e i c h n e t , dass die Rücklaufsperre (72) als unmittelbar an der Umfangsfläche des Aufzugsrades (71) bzw. an dem darauf gewickelten Magnetband (11) anliegendes Bremsrad (74) ausgebildet ist, welches nur in Aufzugsrichtung, nicht aber in Abspielrichtung des Aufzugsrades (71) drehbar ist und welches mittels einer Betätigungsvorrichtung (75) vom Aufzugsrad (71) abhebbar ist.

39.) Grusskarte oder dgl. nach Anspruch 33, d a d u r c h g e -

...

kennzeichnet, dass die Aufzugsbegrenzungsvorrichtung (73) im wesentlichen aus einer Schnur (76) bestimmter Länge besteht, welche mit ihrem ersten Ende an der starren Achse (77) des Aufzugsrades (71) und mit ihrem zweiten Ende an einer, am Aufzugsrad (71) konzentrisch angeordneten Aufwickelrolle (78) befestigt ist.

40.) Grusskarte oder dgl. nach Anspruch 33, dadurch gekennzeichnet, dass eine Bremsvorrichtung (79) unmittelbar benachbart zum Aufzugsrad angeordnet ist und im wesentlichen zwei Rollen (80 bzw. 81) enthält, zwischen welchen das Magnetband (11) angeordnet und welche mit ihren Achsen verschiebbar in zur Abspielrichtung des Magnetbandes (11) hin gerichteten Schlitzen (82 bzw. 83) gelagert ist.

41.) Grusskarte oder dgl. nach Ansprüchen 33 und 34, dadurch gekennzeichnet, dass zusätzlich oder anstelle der Bremsvorrichtung (79) eine zweite Bremsvorrichtung (84) vorgesehen ist, welche im wesentlichen als gummiertes Bremsrad (85) ausgebildet ist, welches mit seiner Achse in einem tangential vom Umfang des Aufzugsrades (71) geführten Schlitz (86) gelagert ist, wobei dieser in Abspielrichtung des Magnetbandes (11) zum Abzugsrad (71) hin geneigt ist und wobei das gummierte Bremsrad (85) gegen die Umfangsfläche bzw. das darauf gelagerte Magnetband des Aufzugsrades (71) anliegt.

...

42.) Grusskarte oder dgl. nach Ansprüchen 1, 2 und 6, d a d u r c h g e k e n n z e i c h n e t , dass der Motor mittels eines Antriebsriemens (87) das Transportrad (12) für das Magnetband (11) über ein darauf angeordnetes, konzentrisches Antriebsrad (13) sowie eine Tonwelle mit Gegendruckwelle (89) antreibt und dass das Magnetband (11) mit seinem bestimmten Vorrat auf dem Transportrad (12) aufgewickelt und über eine Schleife (90) zwischen Tonwelle und Gegendruckwelle (89) geführt und angetrieben und über zwei Umlenkrollen (91 bzw. 92) am Magnetkopf (10) vorbeigeführt ist.

43.) Grusskarte oder dgl. nach den Ansprüchen 1, 2 und 6, d a - d u r c h g e k e n n z e i c h n e t , dass der Motor (88) mittels eines Antriebsriemens (87) das Antriebsrad (13) und das darauf konzentrisch angeordnete Transportrad (12) für das Magnetband (11) sowie eine Gegendruckrolle (93) antreibt, welche auf einem federnd ausgebildeten Hebel (94) gelagert ist, und dass das Magnetband (11) zwischen Transportrad (12) und Andruckrolle (93) geführt und angetrieben ist und über zwei Umlenkrollen (91 bzw. 92) an dem Magnetkopf (10) vorbeigeführt ist und dass der Vorrat des Magnetbandes (11) in Form einer losen, mäanderförmig geführten Bandschleife in einem Speicherkanal eingelegt ist.

FIG. 2

FIG. 1

FIG. 3

FIG. 4

0207258

FIG. 5

FIG. 6

FIG. 7

FIG. 8

FIG. 9

FIG. 10

FIG. 11

## FIG. 10a

## FIG. 10b

53

XII b    XII b

60

**FIG. 12 a**

60

**FIG. 12b**

50

55

54

57

**FIG. 13**

55

56

**FIG. 14**

44

48

46

**FIG. 15**

FIG. 16

FIG. 18

FIG. 17

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 070 653 (COMMODORE ELECTRONICS) * Seite 1, Zeile 1 - Seite 2, Zeile 30 * | 1 | B 42 D 15/02 G 11 B 33/06 G 11 B 25/06 |
| | --- | | |
| D,A | DE-A-3 239 597 (MARCO POLO INDUSTRIES & MERCHANDISING CO.) * Seite 3, Zeile 10 -eite 4, Zeile 24 * | 1 | |
| | --- | | |
| A | DE-U-8 132 321 (AGFA-GEVAERT) * Seite 5, Zeile 1 - Seite 6, Zeile 20 * | | |
| | ----- | | |

RECHERCHIERTE SACHGEBIETE (Int Cl 4)

B 42 D 15/02
G 11 B 5/00
G 11 B 15/00
G 11 B 25/00
G 11 B 31/00
G 11 B 33/00

Der vorliegende Recherchenbericht wurde für alle Patentansprüche erstellt

| Recherchenort | Abschlußdatum der Recherche | |
|---|---|---|
| BERLIN | 26-08-1986 | ROGNONI M.G.L. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82